# EUROPEAN PATENT SPECIFICATION

(11) **EP 0 794 853 B1**
(45) Date of publication and mention of the grant of the patent: **12.01.2000**
(21) Application number: 95939459.4
(22) Date of filing: 24.11.1995
(51) Int. Cl.: B27B 7/00

(54) **SAWING MACHINE**
SÄGEMASCHINE
MACHINE A SCIER

(30) Priority: 29.11.1994 SE 9404136
(43) Date of publication of application: 17.09.1997
(73) Proprietor: AB A K ERIKSSON, 570 30 Mariannelund (SE)
(72) Inventor: JANSON, Kurt, S-570 30 Mariannelund (SE)
(74) Representative: Axelsson, Rolf
(86) International application number: SE9501411
(87) International publication number: WO9616775

(56) References cited:
- WO-A-87/04971

## Description

The present invention relates to a circular saw for re-sawing or ripping lumber, timber and like wood, such as logs, blocks cants and boards, into thinner pieces, wherein the machine includes to this end a plurality of saw blades which are mounted on a saw axle and dogged by the axle as it rotates, a drive motor, and power transmission means mounted between the motor and said axle, wherein the power transmission means includes a belt, chain or like device which extends in a loop around two wheels of which one is intended to be driven by the motor and the other is intended to drive the saw axle.

Present-day requirements with regard to high production rates, thin cuts, large depths of cut and smooth, even cut surfaces place high demands on the stability of both the sawing machine itself and the saw blades. The stiffness of a saw blade is dependent, among other things, on the thickness and radius of the blade. The natural resonance frequency of a circular saw blade, and therewith its critical speed of rotation n_{crit}, is a function of saw geometry, which is defined as t/R², where t is the thickness of the blade and R is its outer radius. The saw blade should preferably work in the subcritical speed range, a suitable speed being n = 0.85 n_{crit}.

In order to achieve the best possible yield, the saw cuts will also be as thin as possible. This requires the use of thin saw blades and it is necessary to give the blades the smallest possible outer radius so as to obtain a high natural resonance index. However, it is not always possible to work with small saw blades, since there are occasions when the sawing machine is required to saw wood of larger sizes that require the use of a larger saw blade. Consequently, the mill is normally forced to work with an excessively large and therewith thick saw blade during the major part of its production, resulting in thick cuts and therewith poor yield.

The yield loss increases by about 2 percentage units with each millimeter of increase in the width of a saw cut. A small blade not only reduces losses due to the width of the cut but also reduces the extent to which the wood needs to be oversized, because the wood is cut to size more accurately with smaller and thinner blades. In order to saw wood of different sizes to an optimum yield, it is thus necessary to use saw blades of mutually different diameters.

However, this means that it must also be possible to alter the speed at which the saw blades rotate, because a small blade will need to rotate at a greater speed than a large blade in order to achieve an optimal cutting speed. A change between saw blades of 750 mm in diameter and 550 mm in diameter requires a speed change of about 30% in order to maintain the same peripheral speed. Although this can be achieved with the aid of frequency-controlled electric motors or with the aid of hydraulic drive systems, such motors and systems are expensive in respect of powers in the order of 160-320 kW.

The main object of the present invention is to provide a circular saw with which wood can be sawn selectively with saw blades of two mutually different radii and which is constructed to permit a switch to be readily made between two mutually different and predetermined blade speeds.

This is achieved in accordance with the invention with the aid of a circular saw of the kind defined in the first paragraph of this document which is characterized in that the transmission ratios between wheels and respective wheel axles are different; in that the wheels and their respective axles are mounted in a separate holder device; and in that said holder device can be fitted between the wheel axles while maintaining the centre distance between said axles, with a selected wheel connected to the drive motor and the other wheel connected to the saw axle so as to enable the saw blades to rotate at one or the other of two predetermined speeds.

The saw thus enables a switch to be made between the two blade speeds very simply, therewith enabling the saw to be used for optimal sawing with two mutually different blade diameters.

The differences in said transmission ratios are conveniently achieved by using wheels of mutually different radii. With the intention of providing a very compact machine which can be readily insulated acoustically with the aid of a hood, the saw construction preferably includes a pillar stand which carries the drive motor and in which the saw axle is journalled, wherein the blade-carrying part of the saw axle projects out from one side of the pillar stand and the other end of the saw axle and the shaft of the drive motor are provided with coupling devices on the opposite side of the pillar stand for connection with the axles of the wheels mounted in the separate holder device. The holder device is therewith suitably mounted on the pillar stand so that the device can be rotated through 180° after disconnecting the wheel axles from the drive motor and the saw axle respectively, and thereafter again connected to the drive motor and the saw axle for changing the rotational speed of the saw blades.

The holder device is preferably provided with an axle journal at half the centre distance between the wheel axles, this axle journal being guided in the pillar stand to permit the holder device to be rotated around said axle journal.

Other characteristic features of the invention will be apparent from the following Claims.

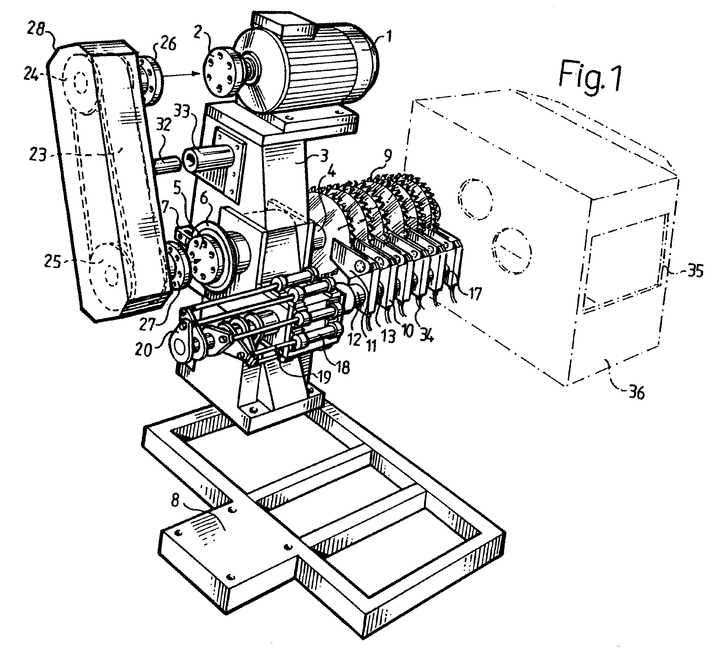

The invention will now be described in more detail with reference to an exemplifying embodiment thereof and also with reference to the accompanying drawings, in which
Fig. 1 is a perspective view of the main components of an inventive saw;
Fig. 2 is a side view of the saw shown in Fig. 1; and
Fig. 3 is a perspective view of part of the saw shown in Fig. 1, with the saw blades removed.

The reference numeral 1 used in the drawings identifies an electric drive motor on whose drive shaft there is mounted a flanged coupling or clutch plate 2. The motor is supported by a pillar stand 3 in which a saw axle 4 is journalled. One end of the saw axle is provided with a flanged coupling or clutch plate 5 corresponding to the coupling plate 2 on the drive motor 1. The reference numeral 6 identifies a brake disc, while 7 identifies a pressure-medium activated brake yoke that coacts with the brake disc 6. In the case of the illustrated embodiment, the pillar stand 3 is intended to be mounted on a bottom stand 8.

The saw axle 4 extends out from the opposite side of the pillar stand 3 to an extent which enables a desired number of saw blades 9 to be fitted to the axle. The saw blades 9 are dogged by the axle 4 as it rotates, for instance by using a spline coupling or a profiled axle and providing the blades with holes whose shape corresponds to the shape of the axle. The saw blades 9 are loose in other respects, i.e. are seated freely on the axle so as to enable the blades to be moved readily in the longitudinal direction of the axle.

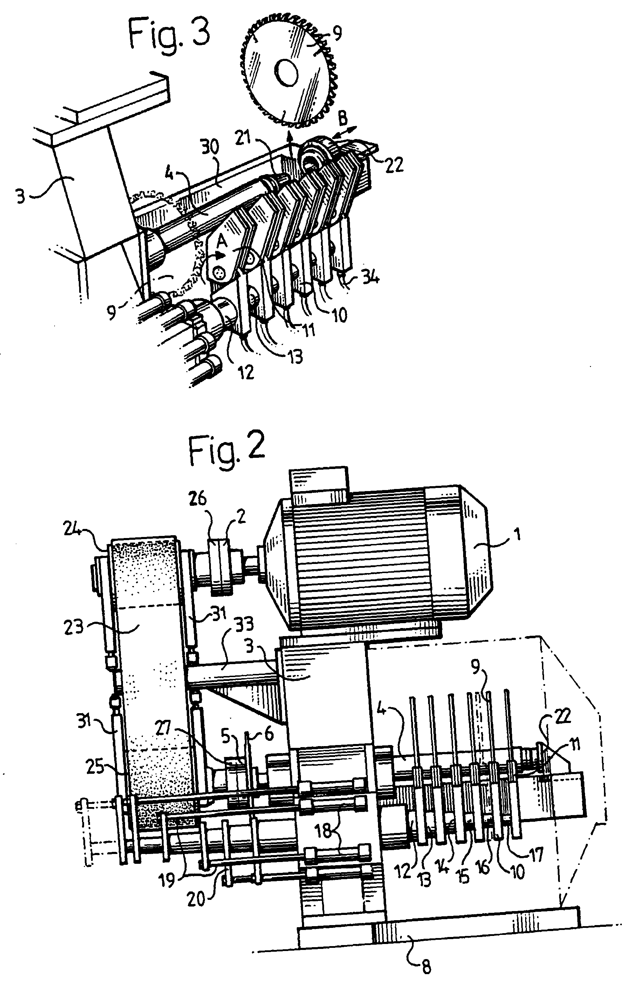

In this regard, the blades are held in their respective positions, determined by the saw-blade set-up concerned, with the aid of blade guides which each include a fixed part 10 and parts 11 which are pivotally connected to said fixed part. The pivotal parts define therebetween a slot in which a respective saw blade 9 is received and guided on both sides thereof. The reference numeral 34 identifies hose connections through which an air-water coolant is delivered to the blade guides. When carrying out a blade change, the pivotal parts 11 of respective blade guides are lifted in the direction of the arrow A in Fig. 3 and the blades then removed from the axle 4.

Each of the fixed parts 10 of the blade guides is fixedly mounted on one of a plurality of mutually telescopic tubes 12-17. The positions of the tubes are set with the aid of servo-controlled hydraulic piston-cylinder devices 18 or with the aid of some other type of setting device, for instance screw jacks, each of which coacts through an associated rod 19 with the tube ends that project out on the other side of the pillar stand 3, through the medium of mounting element 20. The setting devices 18 thus enable the blade guides 10, 11, and therewith the positions of the blades 9, to be set very accurately in accordance with a desired saw-blade set-up. Stable attachment of the axle 4 is achieved by supporting its axle bearing or trunnion 21 with a support bearing 22 mounted on an arm 30 projecting out from the pillar stand 3; see Figs. 2 and 3.

The support bearing 22 can be moved axially in the direction of the arrow B shown in Fig. 3, so as to release engagement between the axle bearing 21 and the support bearing 22, therewith enabling the saw blades 9 to be readily removed from the axle and replaced with newly sharpened blades of the same size or of a different size, after having swung-up the blade guides 11. When changing between blades of different diameters, it is necessary also to change the rotational speed of the axle 4 so as to obtain an optimal cutting speed.

In the illustrated embodiment, the power transmission from the motor 1 to the axle 4 is effected with the aid of a flat belt 23 which extends in a loop around two wheels 24 and 25 whose axles are provided with mutually identical flanged coupling plates 26 and 27 respectively by means of which the wheel 24 and the wheel 25 can be readily coupled with respective flanged coupling plates 2 and 5 on the motor 1 and the axle 4 respectively.

The cover surrounding the flat belt 23 has been omitted in the Fig. 2 illustration and the Figure shows a threaded tensioning device 31 by means of which the belt 23 can be tightened.

The wheels 24 and 25 of the illustrated embodiment have mutually different diameters, to enable the rotational speed of the axle 4 to be switched between two predetermined values. The wheels 24 and 25 are mounted with a constant centre distance in a separate holder device 28 which in the case of the illustrated embodiment includes a guide pin 32 mounted centrally between said wheels and coacting with a sleeve 33 mounted on the pillar stand 3. The rotational speed of the axle 4 is changed simply by releasing the mutually connected flanged coupling plates and slightly withdrawing the holding device 28 and rotating the same through 180°, so that the coupling plate 26 which was earlier connected with the coupling plate 2 on the motor 1 can now be engaged with the coupling plate 5 on the axle 4 and the other coupling plate 27 engaged with the coupling plate of said motor. The axle 4 will then rotate at the other of said two predetermined speeds. Neither the motor nor the saw axle is affected by this repositioning of the transmission means.

As a result of constructing the whole of the saw on the pillar stand 3, there is obtained a very compact construction wherein the saw blades 9 can be enclosed in a sound insulated protective casing 34. The casing 36 includes a feed opening 35 through which wood is fed to the blades, and a corresponding outfeed opening on the opposite side of the casing.

The aforedescribed circular saw construction enables saw blades to be readily exchanged and replaced in combination with accurate guiding of the blades during a sawing operation. The rotational speed of the blades can also be readily switched between two predetermined values, which are chosen to obtain optimum blade speeds. When the transmission provides a transmission ratio of about 1.15:1, there is obtained an upshift and a downshift in the speed of the saw axle that results in the cutting speed being generally equal to shifts between cutting blades of ⌀ 800 and ⌀ 600 or ⌀ 750 and ⌀ 560, and so on.

Although the invention has been described in the aforegoing with reference to a preferred embodiment of a circular saw, it will be understood that the saw can be modified in several respects within the scope of the following Claims. For instance, the flat drive belt can be replaced with a ribbed or toothed belt or a chain which runs over toothed or ribbed wheels. The shift between the input and output axles of the wheels can also be achieved in a manner different to that shown and described.

Because the transmission means used in the inventive machine includes a unit that includes wheels which are mounted at a constant distance apart, the belt or like device can be made very tight so as to prevent tendencies of the belt to slip, since the belt tensioning forces are taken up by the unit and are not transmitted to the motor axle and the saw axle in the form of transversely acting forces.

## Claims

1. A circular saw for re-sawing or ripping lumber, timber or like wood, such as logs, blocks, cants and boards, into thinner pieces, wherein the saw includes a plurality of saw blades (9) which are mounted on a saw axle (4) and dogged by the axle as it rotates, a drive motor (1), and power transmission means mounted between the motor and the axle and including a belt (23), chain or like device which passes in a loop around two wheels (24, 25) of which one is intended to be driven by the motor and the other is intended to drive the saw axle, **characterized** in that the transmission ratios between the wheels (24, 25) and respective wheel axles are mutually different; in that the wheels and their respective axles are mounted in a separate holder device (28), wherein the holder device can be mounted with a selected wheel coupled to the drive motor (1) and the other wheel coupled to the saw axle (4) while maintaining the centre distance between the wheel axles, such as to cause the saw blades (9) to rotate at one or the other of two predetermined speeds in the performance of a cutting operation.

2. A circular saw according to Claim 1, **characterized** in that the wheels (24, 25) have mutually different radii.

3. A circular saw according to Claim 1 or Claim 2, **characterized** in that the saw includes a pillar stand (3) which carries the drive motor (1) and in which the saw axle (4) is journalled; in that the part of the saw axle on which the saw blades (9) are mounted projects out from one side of the pillar stand; in that the other end of the saw axle (4) and the drive motor axle are provided with coupling devices (2, 5) located on the opposite side of the pillar stand for engagement with the axles of the wheels (24, 25) mounted in the separate holder device (28).

4. A circular saw according to claim 3, **characterized** in that the separate holder device (28) is mounted on the pillar stand (3) in a manner to allow the holder device to be rotated through 180°, after having disengaged the axles of the wheels (24, 25) from the drive motor (1) and the saw axle (4) respectively, and thereafter be reconnected with the drive motor and the saw axle for rotation of the saw blades at another speed.

5. A circular saw according to Claim 4, **characterized** in that the holder device (28) includes a pin (32) which is located at half the centre distance between the wheel axles; and in that said pin (32) is guided in the pillar stand (3) in a manner to permit the holder device to rotate about said pin.

## Patentansprüche

1. Kreissäge zum Nachsägen oder Längsschneiden von Holz, Balken oder ähnlichen Hölzern, wie Holzstämmen, Blockhölzern, Kanthölzern oder Brettern in donnere Teile, wobei die Säge einschließt: eine Mehrzahl von Sägeblättern (9) die auf einer Sägeachse (4) montiert sind und durch die Achse wenn sie rotiert, mitgenommen werden, einen Antriebsmotor (1) und eine Kraftübertragungseinrichtung, die zwischen dem Motor und der Achse montiert ist und die einen Riemen (23), eine Kette oder eine ähnliche Vorrichtung einschließt, die in einer Schleife rund um zwei Räder (24, 25) verläuft, von denen eines zum Antreiben durch den Motor und das andere zum Antreiben der Sägeachse bestimmt ist,
**dadurch gekennzeichnet, daß**
das Übertragungsverhältnis zwischen den Rädern (24, 25) und den jeweiligen Radachsen wechselseitig unterschiedlich ist; daß die Räder und ihre entsprechenden Achsen in einer getrennten Haltevorrichtung (28) montiert sind, wobei die Haltevorrichtung mit einem ausgewählten Rad, das mit dem Antriebsmotor (1) verbunden ist und dem anderen Rad, das mit der Sägeachse (4) verbunden ist, montiert sein kann, während das Zentrum des Abstandes zwischen den Radachsen beibehalten wird, so daß die Sägeblätter (9) veranlaßt werden, entweder mit einer oder mit der anderen von zwei vorbestimmten Geschwindigkeiten bei der Durchführung eines Schneidbetriebs zu rotieren.

2. Kreissäge nach Anspruch 1, dadurch gekennzeichnet, daß die Räder (24, 25) wechselseitig unterschiedliche Radien aufweisen.

3. Kreissäge nach Anspruch 1 oder Anspruch 2, dadurch gekennzeichnet, daß die Säge: einen Säulenständer (3) der den Antriebsmotor (1) trägt und in dem die Sägeachse (4) gelagert ist einschließt, daß der Teil der Sägeachse auf dem die Sägeblätter (9) montiert sind aus einer der Seiten des Säulenständers herausragt; daß das andere Ende der Sägeachse (4) und die Antriebsmotorachse mit Kupplungsvorrichtungen (2,5) versehen ist, die aufder gegenüberliegenden Seite des Säulenständers für den Eingriff mit den Achsen der Räder (24, 25), die in der getrennten Haltevorrichtung (28) montiert sind, angeordnet sind.

4. Kreissäge nach Anspruch 3, dadurch gekennzeichnet, daß die getrennte Haltevorrichtung (28) an dem Säulenständer (3) in einer Weise montiert ist, die es ermöglicht, die Haltevorrichtung um 180° zu drehen, nach dem die Achsen der Räder (24, 25) von dem Antriebsmotor (1) bzw. von der Sägeachse (4) getrennt wurden und danach wieder mit dem Antriebsmotor und der Sägeachse zum Drehen der Sägeblätter mit einer anderen Geschwindigkeit zu verbinden.

5. Kreissäge nach Anspruch 4, dadurch gekennzeichnet, daß die Haltevorrichtung (28) einen Stift (32) einschließt, der in dem halben Zentrumsabstand zwischen den Radachsen angeordnet ist; und daß der Stift (32) in dem Säulenständer (3) in einer Weise geführt wird, um der Haltevorrichtung zu ermöglichen, um den Stift gedreht zu werden.

## Revendications

1. Scie circulaire pour scier à nouveau ou scier de long du bois d'oeuvre, du bois de charpente ou du bois équivalent tel que des rondins, des billes, des grumes ou des planches en pièces plus minces, la scie comprenant une pluralité de lames de scie (9) qui sont montées sur un axe de scie (4) et fixées par l'axe lorsqu'il tourne, un moteur d'entraînement (1), des moyens de transmission de puissance montés entre le moteur et l'axe et incluant une courroie (23), une chaîne ou un dispositif équivalent qui passe en boucle autour de deux poulies (24, 25) dont l'une est prévue pour être entraînée par le moteur et l'autre est prévue pour entraîner l'axe de scie, caractérisée en ce que les rapports de transmission entre les poulies (24, 25) et les axes de poulie correspondants sont différents; en ce que les poulies et leur axe respectif sont montés dans un dispositif distinct (28) formant support, le dispositif formant support pouvant être monté avec une poulie sélectionnée couplée au moteur d'entraînement (1) et l'autre poulie couplée à l'axe de scie (4) tout en conservant la distance entre les axes de poulie, de façon à faire tourner les lames de scie (9) à l'une ou l'autre des deux vitesses prédéterminées lorsque l'on procède à l'opération de coupe.

2. Scie circulaire selon la revendication 1, caractérisée en ce que les poulies (24, 25) ont des rayons différents.

3. Scie circulaire selon la revendication 1 ou la revendication 2, caractérisée en ce que la scie comprend un pied à colonne (3) qui supporte le moteur d'entraînement (1) et dans lequel l'axe de scie (4) est supporté par des tourillons; en ce que la partie de l'axe de scie sur laquelle les laines de scie (9) sont montées fait saillie d'un côté du pied à colonne; en ce que l'autre extrémité de l'axe de scie (4) et l'axe de moteur d'entraînement sont dotés de dispositifs d'accouplement (2, 5) situés du côté opposé du pied à colonne pour l'engagement avec les axes des poulies (24, 25) montés dans le dispositif distinct (28) formant support.

4. Scie circulaire selon la revendication 3, caractérisée en ce que le dispositif distinct (28) formant support est monté sur le pied à colonne (3) de façon à permettre la rotation du dispositif formant support sur 180°, après avoir désengagé les axes des poulies (24, 25) du moteur d'entraînement (1) et de l'axe de scie (4) respectivement, puis les avoir raccordés avec le moteur d'entraînement et l'axe de scie pour la rotation des lames de scie à une autre vitesse.

5. Scie circulaire selon la revendication 4, caractérisée en ce que le dispositif formant support (28) comprend un pivot (32) qui est situé à mi-distance entre les axes de poulie; et en ce que ledit pivot (32) est guidé dans le pied à colonne (3) de façon à permettre la rotation du dispositif formant support autour dudit pivot.
